# EUROPEAN PATENT SPECIFICATION

(11) **EP 3 444 111 B1**
(45) Date of publication and mention of the grant of the patent: **23.09.2020**
(21) Application number: 16901698.7
(22) Date of filing: 13.05.2016
(51) Int. Cl.: B32B 27/00, B05D 5/00, B05D 7/10, G02B 1/10

(54) **RESIN GLASS SHEET AND METHOD FOR MANUFACTURING SAME**
HARZGLASPLATTE UND VERFAHREN ZUR HERSTELLUNG DAVON
FEUILLE DE VERRE DE RÉSINE ET SON PROCÉDÉ DE FABRICATION

(43) Date of publication of application: 20.02.2019
(73) Proprietor: Kabushiki Kaisha Reniasu, Hiroshima 7290473 (JP)
(72) Inventor: ADACHI, Maki, Mihara-shi Hiroshima 729-0473 (JP)
(74) Representative: Kramer Barske Schmidtchen Patentanwälte PartG mbB
(86) International application number: PCT/JP2016/064282
(87) International publication number: WO 2017/195350

(56) References cited:
- JP-A- H1 135 713
- JP-A- 2008 242 154
- JP-A- 2010 186 124
- JP-A- 2014 006 448
- JP-B2- 4 536 824
- JP-B2- 5 778 997
- US-A1- 2010 304 133

## Description

### TECHNICAL FIELD

The present invention provides a resin glass plate whose surface is modified to be glass-like, and a method for manufacturing the same in a transparent resin plate which is used for fluoroscopy or lighting.

### BACKGROUND ART

A polycarbonate substrate has been used as a substrate of the transparent resin plate used for window glass for a vehicle or window glass for a building material for a long time. Although the polycarbonate substrate is lightweight and excellent in moldability in comparison with a glass substrate, it has problems that the surface easily gets scratches and easily generates deformation, discoloration and deterioration due to sunlight, wind and rain. Accordingly, this inventor, in an earlier application, proposed a resin glass plate having a surface layer of a hard coat layer photo-modified into a hard thin film and a method for manufacturing the same by forming the hard coat layer of silicone polymer on the transparent resin plate and then irradiating ultraviolet rays having a specific wavelength on the surface of the hard coat layer, in order to solve the above-mentioned problems (Patent literature 1). This resin glass plate has been succeeded in improving abrasion resistance and scratch resistance in a state of keeping higher hardness, transparency and flatness by setting the film thickness of a modification layer to less than 0.6 µm.

However, even in the hard coat layer having the modification layer excellent in scratch resistance, cracks and breakage are generated when the hard coat layer is exposed to a high temperature environment of over 100□ for a long period. In the upshot, this hard coat layer does not have sufficient durability against temperature change.

On the one hand, as for the resin glass, various fillers are added in the hard coat layer to exert desired functions. However, even in such case, it is known to conversely degrade the other properties because of aggregation of the fillers, the difference in the surface energy between the fillers and the resin, and so on.

On the other hand, recently, cellulose nanofibers having excellent characteristic are used to put a lightweight and high strength material, a packing material or an electronic material into practical use.

Japanese Unexamined Patent Publication No. 2010-186214 (Patent literature 1) discloses an optical film which includes a hard coat layer containing cellulose nanofibers having an average fiber diameter of 4 to 200 nm and an average fiber length of 100 nm or more into thermosetting resin in the range of 0.1 to 50 mass %, laminated on a support medium, to prevent generation of curling, occurrence of cracks and breakage, and formation of wrinkles caused by surface shrinkage even in a thin film.

Japanese Unexamined Patent Publication No. 2012-131201 (Patent literature 2) discloses a hard coat film which includes a hard coat layer containing chitin nanofibers having an average fiber diameter of 4 to 50 nm and an average fiber length of 100 nm or more into curable resin in the range of 0.001 to 30 mass %, formed on a plastic film, to form a hard surface hardly causing cracks and being excellent in flexibility, abrasion resistance and scratch resistance.

Japanese Patent No. 5778997 (Patent literature 3) discloses an optical film which includes a hard coat layer containing cellulose nanofibers each having an average fiber diameter of 10 to 500 nm and an average fiber length of 20 to 500 µm into curable resin in the range of 0.01 to 3 mass %, formed on a transparency film, to obtain an optical film having low reflection and low haze, suppressing glare, increasing black tinge and having abrasion resistance. Patent literature 5 discloses a resin glass plate comprising:a transparent resin substrate, and a hard coat layer formed on the transparent resin plate,wherein the hard coat layer is formed of a thermosetting material of a silicone polymer, wherein the hard coat layer has a surface formed into a modification layer having a film thickness of more than 0.2µm and less than 0.6µm, and said modification layer is composed mainly of silicon dioxide by selectively cutting and recombining Si-0-Si bonds. It does not disclose cellulose nanofibers.

However, none of the Patent literatures 2 to 4 refer to the relation between the photo-modified modification layer and the cellulose nanofibers on the hard coat layer. Even though the hard coat layer contains the cellulose nanofibers with superior characteristic, it is impossible to be successful at both high scratch resistance and high weather resistance while maintaining high hardness, flatness and high transparency.

### RELATED ART DOCUMENTS

### PATENT DOCUMENTS

Patent literature 1: Japanese Patent No. 4536824
Patent literature 2: Japanese Unexamined Patent Application Publication No. 2010-186124
Patent literature 3: Japanese Unexamined Patent Application Publication No. 2012-131201
Patent literature 4: Japanese Patent No. 5778997 Patent literature 5: US 2010/304 133 A1

### SUMMARY OF THE INVENTION

### OBJECT TO BE SOLVED BY THE INVENTION

The problems to be solved is to provide a high hardness resin glass plate capable of improving durability with respect to temperature change in a state of maintaining transparency, scratch resistance and abrasion resistance wherein a silicone hard coat layer, the surface of which is photo-modified is formed on a transparent resin plate, and to provide a method for manufacturing the same.

### MEANS OF SOLVING THE PROBLEMS

The resin glass plate of the present invention is characterized by forming a hard coat layer containing cellulose nanofibers, the surface of which is photo-modified, on a transparent resin substrate.

That is, the resin glass plate of the present invention includes a transparent resin substrate and a hard coat layer formed thereon. The hard coat layer has a photo-modified modification layer on the surface layer. Here, the hard coat layer is formed of a thermosetting silicone polymer containing cellulose nanofibers, and the modification layer has a film thickness of more than 0.2 µm and less than 0.6 µm A cellulose nanofiber content is preferably 0.4 to 4.0 pts. wt. based on 100 pts. wt. of the silicone polymer.

The present invention includes also a method for manufacturing a resin glass plate forming a modification layer having a film thickness of more than 0.2 µm and less than 0.6 µm on the surface of a hard coat layer by applying a coating liquid on a transparent resin substrate, heat-drying the applied coating liquid, and then irradiating vacuum ultraviolet rays thereon. The coating liquid above contains cellulose nanofibers in a silicone polymer hard coating liquid for forming a hard coat layer in amount of 0.4 to 4.0 pts. wt. based on 100 pts. wt. of silicone polymer.

### EFFECTS ON THE INVENTION

In the resin glass plate of the present invention, because the cellulose nanofibers are included at a rate of 0.4 to 4.0 pts. wt. based on 100 pts. wt. of silicone polymer, cracks are hardly caused by concentration of stress due to the difference in thermal expansion coefficients between the modification layer and the non-modification layer or the polycarbonate substrate. Therefore, the resin glass plate having high hardness, excellent scratch resistance and abrasion resistance while keeping transparency and excellent durability to temperature change can be manufactured.

### BRIEF DESCRIPTION OF THE DRAWINGS

FIG. 1 is a schematic diagram showing an embodiment of a method for manufacturing a resin glass plate of the present invention.
FIG. 2 is a schematic diagram showing a comparative embodiment different from the method for manufacturing the resin glass plate of the present invention.

### MODE FOR CARRYING OUT THE INVENTION

The present invention will be explained below

The resin glass plate is configured so as to form a hard coat layer containing cellulose nanofibers, the surface of which is formed into a modification layer due to photo-modification, on a transparent resin substrate.

In the present invention, the photo-modification is to modify a part of the hard coat layer into a hard thin film layer, namely, wherein chemical bonds of the surface layer of the hard coat layer are cut by irradiating vacuum ultraviolet rays of 200 nm or less wavelength on the hard coat layer and reactive oxygens separated from ozone generated from the vacuum ultraviolet rays and molecules of the cut surface layer are recombined.

Although the transparent resin substrate used in the present invention is not particularly limited, flat plates formed of transparent resin material such as polycarbonate, acrylic resin, polyarylate, polystyrene, polyethylene-terephthalate or styrene-based polymer, or various olefin resin material can be used. Above all, polycarbonate is preferably excellent in impact resistance and heat resistance, and able to be inexpensively obtained. The transparent resin plate having a thickness of 0.5 to 10.0 mm is preferable for window glass.

The hard coat layer in the present invention is formed by applying and curing a silicone-based hard coating liquid containing cellulose nanofibers composed mainly of silicone polymer on the transparent resin plate. Solvent having siloxane structure, which is obtained by hydrolyzing siloxane sol obtained through condensation reaction using alkoxysilane as a base, is used as the silicone-based hard coating liquid. Although the thickness of the hard coat layer is not particularly limited, the average film thickness is preferably 4.0 to 30.0 µm.

The cellulose nanofibers incorporated in the hard coat layer are composed of fibers each having an average fiber diameter of 3 to 30 nm and an average fiber length of 200 to 1500 nm. When the fiber diameter is over 30 nm or the fiber length is over 1500 nm, the hard coat layer is easily damaged in transparency. Besides, in this case, a specified network structure based on the cellulose nanofibers is hardly formed in the hard coat layer, and the vacuum ultraviolet rays hardly reach the deep section of the hard coat layer, and because of those, the photo-modification cannot be sufficiently carried out.

There is no restriction on materials and manufacturing methods, but, for the cellulose nanofibers used in the present invention, they only need to have 6-1, 4-glucan structure, and may be cellulose chemically synthesized/modified (for example, cellulose derivatives). These cellulose nanofibers can be added into the silicone-based hard coating liquid directly or as dispersing liquid. However, in using the dispersing liquid, components other than cellulose such as hemicellulose or lignin derived from plant or excess chemical agents used in the chemical synthesis, which are incorporated in a manufacturing process of cellulose nanofibers, are preferably removed to maintain transparency of the hard coat layer.

The cellulose nanofiber content in the hard coat layer is preferably 0.4 to 4.0 wt. % to the silicone polymer of the main component. In case the cellulose nanofiber content is less than 0.4 wt. %, the hard coat layer cannot be sufficiently protected from thermal expansion, and therefore, the occurrence of cracks due to temperature change cannot be suppressed. In case the cellulose nanofiber content is over 4.0 wt. %, the vacuum ultraviolet rays are prevented from reaching the deep section of the hard coat layer, and therefore, a modification layer having the thickness enough to exhibit superior scratch resistance and abrasion resistance cannot be formed. In addition, it is also not preferable in point that the transparency is consequently lowered by high haze because the film thickness is increased because viscosity of the hard coat layer becomes higher and the coating property is reduced.

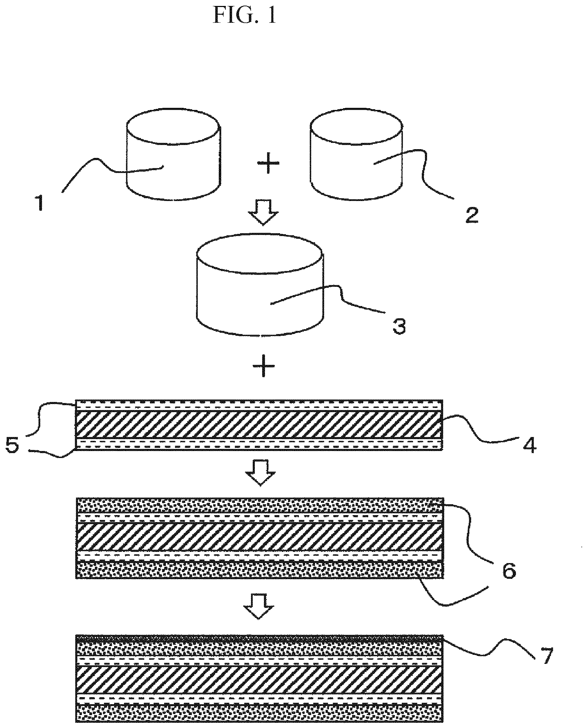

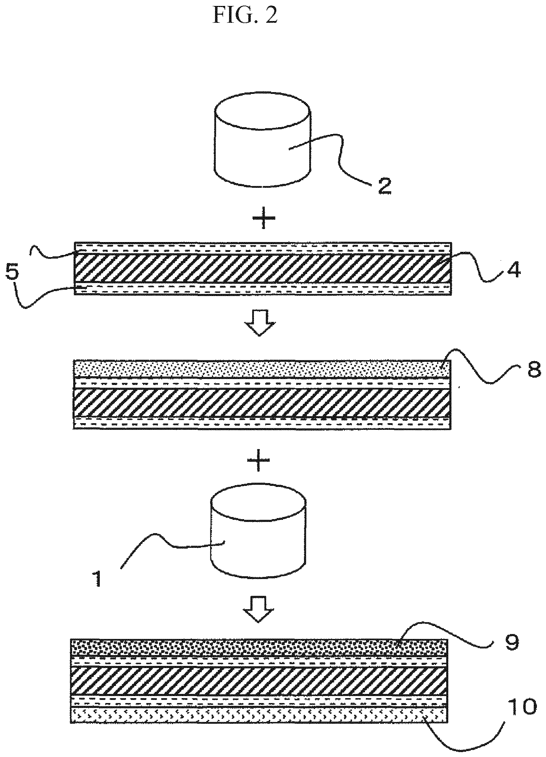

The hard coat layer containing the cellulose nanofibers, as shown in FIG. 1, is formed by heat-drying for the predetermined time after applying the silicone type hard coating liquid mixed with the cellulose nanofibers on the substrate by a dip coating method. Further, as shown in FIG. 2, it may be formed by once drying for the predetermined time after applying a cellulose nanofiber dispersion liquid on the substrate, and thereafter, by heat-drying for the predetermined time again after applying the silicone type hard coating liquid by the dip coating method.

In mixing the cellulose nanofibers into the hard coating liquid, the cellulose nanofibers are added into the hard coating liquid and homogeneously dispersed in the silicone type hard coating liquid by stirring and mixing by a magnet stirrer. The thickness of the hard coat layer containing cellulose nanofibers is adjusted by adjusting a drawing speed of the dip coating.

In forming the cellulose nanofiber layer on the substrate previously, for example, the cellulose nanofiber layer is formed by applying 1.0 wt. % cellulose nanofiber dispersion liquid on the substrate and drying for the predetermined time, and then, the silicone type hard coating liquid is applied thereon by the dip coating method, and in the same manner as mentioned above, the whole thickness of the hard coat layer containing cellulose nanofibers is adjusted.

The hard coating layer containing cellulose nanofibers in the present invention may be formed by applying the hard coating liquid mixed with the cellulose nanofibers by a spin coating method or a flow coating method.

In the present invention, in forming the hard coat layer containing cellulose nanofibers on the substrate, a primer layer may be provided therebetween to improve adhesion between the substrate and the hard coat layer. The primer layer is formed by heat-drying for the predetermined time after applying each resin such as polyester resin, acrylic resin, polyurethane resin, epoxy resin, melamine resin, polyolefin resin, or urethane acrylate resin by the dip coating method.

The hard coat layer containing cellulose nanofibers in the present invention is irradiated with the vacuum ultraviolet rays having a wavelength of 200 nm or less to be photo-modified the surface portion into a modification layer having a fixed thickness.

The modification layer in the present invention is formed into a hard thin layer composed mainly of silicon dioxide by selectively cutting C-H bonds, Si-C bonds and Si-O-Si bonds, which constitute a side-chain functional group of the silicone polymer of the hard coat layer, with the vacuum ultraviolet rays in order, and then recombining these cleft oxygen atoms and silicon atoms.

As a light source for the vacuum ultraviolet rays having a wavelength of 200 nm or less, for example, an excimer lamp, a low pressure mercury vapor lamp and an excimer laser can be used. When using any of these lamps, photo-modification can be efficiently performed because light can be widely irradiated. Irradiation energy differs depending on the thickness of the hard coat layer. For example, in case of an excimer lamp having a wavelength of 200 nm, the accumulative dose of the vacuum ultraviolet rays should be about 100 mJ/cm², and an irradiation distance to the substrate should be about 3 mm.

In using the excimer lamp as a light source of the vacuum ultraviolet rays, light penetrating the hard coat layer sometimes reaches and decomposes the substrate under the hard coat layer, and also, the thickness of the modification layer is sometimes hard to be adjusted because the light penetrates the hard coat layer as high energy. In this case, for example, the modification layer can be adjusted so as to have the desired thickness by adjusting quantity of light of the penetrating vacuum ultraviolet rays by dispersing ultraviolet absorber on the hard coat layer.

The thickness of the modification layer in the present invention differs depending on the thickness of the hard coat layer, and also depending on the fiber diameter, the fiber length or the content of the included cellulose nanofibers. The modification layer having the thickness of more than 0.2 µm and less than 0.6 µm can preferably further improve durability due to temperature change (heat residence, weather residence) on exhibiting superior scratch residence and abrasion residence as window glass.

In the hard coat layer containing the cellulose nanofibers in the present invention, a thermal contraction force of the modification layer is dispersed by fine network structure due to the dispersed cellulose nanofibers, as the result, the occurrence of visible cracks is suppressed. Therefore, it is considered that the heat resistant can be improved. Further, a tensile stress due to thermal expansion of the substrate is moderated by the cellulose nanofibers with low thermal expansion coefficient contained in the non-modification layer, as the result, as the result, a difference in thermal expansion coefficient is reduced between the substrate and the modification layer. Therefore, it is considered that the occurrence of cracks is suppressed.

Resin glass and a method for manufacturing that related to the present invention will be explained by using examples in detail. However, the present invention is not limited by these examples. The resin glasses obtained by the examples and comparative examples have been evaluated from the following items.

### (Transparency, Scratch resistance, Abrasion resistance)

A friction test was performed in accordance with Taber Friction Test. The Taber Friction Test was performed under an abrasion condition of 500g load and 1000 rotations conforming to JISK7204 according to Japanese Industrial Standards Committee (JISC) to evaluate these functions by measuring the haze value. In Table 1, a circle (o) is marked to examples wherein an increase in haze in before and after the Taber Friction Test is not more than 2.0%, and a cross (x) is marked in case of more than 2.0%.

### (Heat resistance)

Occurrence of cracks was visually confirmed after heating at 110°C for 16 hours. In Table 1, a circle (o) is marked to examples wherein cracks were not confirmed, and a cross (x) is marked to examples wherein cracks were confirmed.

### (Example 1)

The present example will be explained with reference to drawings.

As shown in FIG. 1, a cellulose nanofiber-containing hard coat liquid 3 was made by adding a cellulose nanofiber dispersion 2 (3-10 nm average fiber diameter, 200-800 nm average fiber length, 1 pts. Wt. aqueous dispersion) into a silicone hard coat liquid 1 (Momentive-made AS4700F: 27% silicone solid content) so that the cellulose nanofiber ratio is 0.4 wt. % to the silicone solid content, and then, by stirring them with a magnet stirrer.

A primer layer 5 having a thickness of 4 µm was formed by applying a primer solution on a polycarbonate substrate 4 according to a dip coating method, and by heat-drying at 130°C for 15 minutes. Then, a cellulose nanofiber-containing hard coat layer 6 having a thickness of 10 µm was formed by applying the cellulose nanofiber-containing hard coat liquid 3 on the substrate according to the dip coating method, and by drying at 130°C for 30 minutes. Then, a surface of the hard coat layer was modified by irradiating with an excimer lamp of 172 nm of a cumulative exposure dose of 2,100 mJ/cm². The thickness of a modification layer 7 was 0.4 µm.

### (Example 2)

A hard coat layer was produced similarly to Example 1 except for using a hard coat liquid containing the cellulose nanofibers at the rate of 2.0 wt. % to the silicone solid content, and its surface was photo-modified. The thickness of a modification layer was 0.3 µm.

### (Example 3)

A hard coat layer was produced similarly to Example 1 except for using a hard coat liquid containing the cellulose nanofibers at the rate of 4.0 wt. % to the silicone solid content, and its surface was photo-modified. The thickness of a modification layer was 0.4 µm.

### (Example 4)

A hard coat layer was produced similarly to Example 1 except for using a dispersion containing cellulose nanofibers each having 10-30 nm average fiber diameter and 500-1500 nm average fiber length, and its surface was photo-modified. The thickness of a modification layer was 0.3 µm.

### (Comparative example 1)

A hard coat layer containing no cellulose nanofibers was similarly produced, and the photo-modification was performed. The thickness of a modification layer was 0.5 µm.

### (Comparative example 2)

A hard coat layer containing the cellulose nanofibers at the rate of 6.0 wt. % was similarly produced, and the photo-modification was performed. The thickness of a modification layer was 0.2 µm.

### (Comparative example 3)

This is an example wherein a cellulose nanofiber layer is formed on a substrate in advance. As shown in FIG. 2, similarly to the above-mentioned Example 1, a primer layer 5 was formed on a polycarbonate substrate 4 by the dip coating, and thereafter, it was dried at 130□ for 15 minutes. A cellulose nanofiber layer 8 was formed by putting a 10 wt. % cellulose nanofiber dispersion 2 on the substrate, and by drying at 40□ for one day. Then, a hard coat layer 9 containing cellulose nanofibers was formed by applying a silicone hard coat liquid 1 by the dip coating similarly to the above-mentioned example, and by drying at 130□ for 30 minutes after an entire night under decompression. The solid content concentration of cellulose nanofibers was 50%. Next, although the excimer lamp of 172 nm was irradiated on the surface of the hard coat layer containing cellulose nanofibers by the cumulative exposure dose of 2,100 mJ/cm², a modification layer was not obtained. Numeral 10 is a hard coat layer having no cellulose nanofibers.

The scratch resistance and the heat resistance of each resin glass plate produced by Examples 1 to 4 and Comparative examples 1 to 3 were evaluated. The results are shown in Table 1.

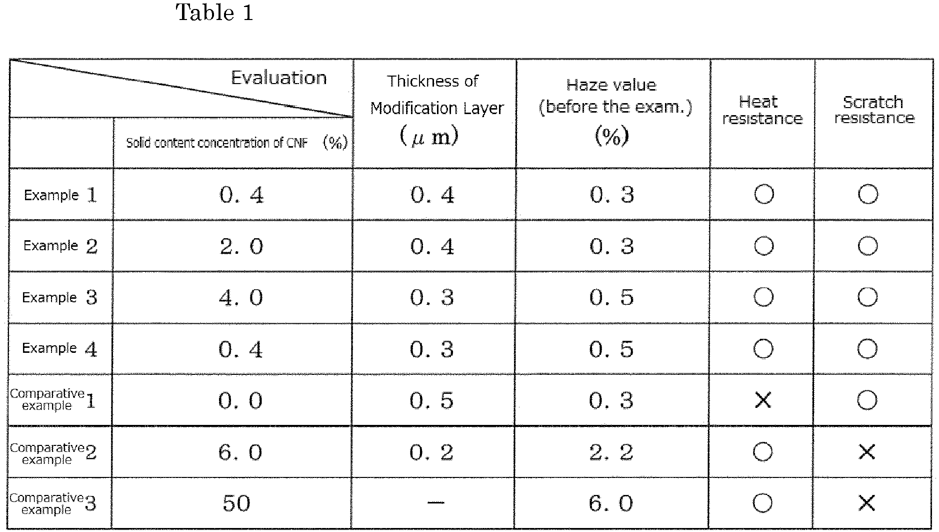

As is clear from the evaluation of Table 1, the resin glass plates of the examples have respectively excellent scratch resistance and heat resistance as well as high transparency of a haze value of 1.0% or less. On the other hand, these characteristics cannot be made compatible in the resin glass plates of the comparative examples. When the content of cellulose nanofiber is less than 0.4 wt. %, the modification layer is produced in sufficient scratch resistance but inferior heat resistance. When it is more than 4.0 wt. %, the modification layer can be improved in heat resistance but insufficient scratch resistance.

### INDUSTRIAL APPLICABILITY

The resin glass plate regarding the present invention can lengthen the service life of various resin windows for a vehicle, a ship, an aircraft and a building material.

### EXPLANATION OF REFERENCED NUMERALS

- 1: silicone-based hard coating liquid
- 2: cellulose nanofiber dispersion
- 3: cellulose nanofiber-containing hard coat liquid
- 4: polycarbonate substrate
- 5: primer layer
- 6, 9: cellulose nanofiber-containing hard coat layer
- 7: modification layer
- 8: cellulose nanofiber layer
- 10: hard coat layer having no cellulose nanofibers

## Claims

1. A resin glass plate comprising:
a transparent resin substrate, and
a hard coat layer formed on the transparent resin plate,
wherein the hard coat layer is formed of a thermosetting material of a silicone polymer containing cellulose nanofibers of 0.4 to 4.0 pts. wt. based on 100 pts. wt. of silicone polymer, and
wherein the hard coat layer has a surface formed into a modification layer having a film thickness of more than 0.2 µm and less than 0.6 µm, and said modification layer is composed mainly of silicon dioxide by selectively cutting and recombining Si-O-Si bonds.

2. The resin glass plate according to claim 1, further comprising:
a primer layer formed on the transparent resin plate, and
wherein the hard coat layer is formed on the primer layer.

3. A method for manufacturing the resin glass plate according to claim 1 or 2, comprising:
applying a coating liquid containing 0.4 to 4.0 pts. wt. of cellulose nanofibers based on 100 pts. wt. of the silicone polymer to a silicone polymer hard coating liquid to the transparent resin plate,
forming a hard coat layer containing cellulose nanofibers by heat-drying the coating liquid, thereafter,
irradiating with vacuum ultraviolet rays having a wavelength of 200 nm or less on the hard coat layer, and
forming a surface of the hard coat layer into a modification layer having a film thickness of more than 0.2 µm and less than 0.6 µm.

## Patentansprüche

1. Harzglasplatte, umfassend:
ein transparentes Harzsubstrat, und
eine auf der transparenten Harzplatte gebildete harte Überzugsschicht,
wobei die harte Überzugsschicht aus einem wärmehärtbaren Material aus einem Silikonpolymer gebildet ist, das Cellulose-Nanofasern von 0,4 bis 4,0 Gewichtsteilen, bezogen auf 100 Gewichtsteile Silikonpolymer, enthält, und
wobei die harte Überzugsschicht eine Oberfläche aufweist, die zu einer Modifikationsschicht mit einer Filmdicke von mehr als 0,2 µm und weniger als 0,6 µm ausgebildet ist, und die Modifikationsschicht hauptsächlich aus Siliziumdioxid durch selektives Schneiden und Rekombinieren von Si-O-Si-Bindungen zusammengesetzt ist.

2. Harzglasplatte nach Anspruch 1, ferner umfassend:
eine Primerschicht, die auf der transparenten Harzplatte ausgebildet ist, und
wobei die harte Überzugsschicht auf der Primerschicht ausgebildet ist.

3. Verfahren zur Herstellung der Harzglasplatte nach Anspruch 1 oder 2, umfassend:
Aufbringen einer Beschichtungsflüssigkeit, die 0,4 bis 4,0 Gewichtsteile an Cellulose-Nanofasern, bezogen auf 100 Gewichtsteile des Silikonpolymers, in einer Silikonpolymer-Hartbeschichtungsflüssigkeit enthält, auf die transparente Harzplatte,
Ausbilden einer harten Überzugsschicht, die Cellulose-Nanofasern enthält, durch anschließendes Wärmetrocknen der Beschichtungsflüssigkeit,
Bestrahlen der harten Überzugsschicht mit Vakuum-Ultraviolettstrahlen mit einer Wellenlänge von 200 nm oder weniger, und
Ausbilden einer Oberfläche der harten Überzugsschicht zu einer Modifikationsschicht mit einer Filmdicke von mehr als 0,2 µm und weniger als 0,6 µm.

## Revendications

1. Feuille de verre en résine comprenant :
un substrat de résine transparent, et
une couche de revêtement dur formée sur la plaque de résine transparente,
dans laquelle la couche de revêtement dur est formée d'un matériau thermodurcissable d'un polymère de silicone contenant des nanofibres de cellulose de 0,4 à 4,0 pts. en poids sur la base de 100 pts. en poids de polymère de silicone, et
dans laquelle la couche de revêtement dur présente une surface formée en une couche de modification présentant une épaisseur de film supérieure à 0,2 µm et inférieure à 0,6 µm, et ladite couche de modification est composée principalement de dioxyde de silicium par découpe et recombinaison sélectives de liaisons Si-O-Si.

2. Feuille de verre en résine selon la revendication 1, comprenant en outre :
une couche d'apprêt formée sur la plaque de résine transparente, et
dans laquelle la couche de revêtement dure est formée sur la couche d'apprêt.

3. Procédé de fabrication de la plaque de verre en résine selon la revendication 1 ou 2, comprenant les étapes consistant à :
appliquer un liquide de revêtement contenant 0,4 à 4,0 pts. en poids de nanofibres de cellulose sur la base de 100 pts. en poids du polymère de silicone à un liquide de revêtement dur de polymère de silicone sur la plaque de résine transparente,
former une couche de revêtement dur contenant des nanofibres de cellulose en séchant à la chaleur le liquide de revêtement, puis
irradier des rayons ultraviolets sous vide présentant une longueur d'onde de 200 nm ou moins sur la couche de revêtement dur, et
transformer une surface de la couche de revêtement dur en une couche de modification présentant une épaisseur de film supérieure à 0,2 µm et inférieure à 0,6 µm.
